# EUROPÄISCHE PATENTSCHRIFT

(11) **EP 0 894 544 B1**
(45) Veröffentlichungstag und Bekanntmachung des Hinweises auf die Patenterteilung: **10.09.2003**
(21) Anmeldenummer: 98113952.0
(22) Anmeldetag: 25.07.1998
(51) Int. Cl.: B08B 9/46, B08B 9/42

(54) **Inspektionsmaschine zum Prüfen von Flaschen oder dgl.**
Inspection machine for testing bottles or the like
Machine d'inspection pour tester des bouteilles ou similaires

(30) Priorität: 01.08.1997 DE 29713701 U
(43) Veröffentlichungstag der Anmeldung: 03.02.1999
(73) Patentinhaber: KRONES AG, 93068 Neutraubling (DE)
(72) Erfinder: Löll, Josef, 93055 Regensburg (DE)

(56) Entgegenhaltungen:
- EP-A- 0 695 704
- DE-A- 2 649 360
- DE-U- 29 607 937
- GB-A- 2 155 626
- US-A- 4 651 879

## Beschreibung

Die Erfindung betrifft eine Inspektionsmaschine zum Prüfen von Flaschen oder dgl. mit einem Sternrad zum Vorbeiführen der Flaschen an einer Inspektionseinrichtung, wobei das Sternrad an seiner Peripherie mit Halteorganen zum Erfassen der Flaschen ausgestattet ist.

Eine entsprechende Inspektionsmaschine ist aus der DE 26 49 360 A1 bekannt. Die auf Sauberkeit und Beschädigungsfreiheit zu überprüfenden transparenten Getränkeflaschen werden einem mit steuerbaren Greifzangen ausgerüsteten Sternrad zugeführt und im weiteren Verlauf an wenigstens einer Inspektionsvorrichtung vorbeigeführt. Fehlerhafte Flaschen werden von jeweils einer Greifzange dicht unterhalb ihrer Mündung erfasst und einem Sammelplatz zugeführt. Da die Greifzangen oberhalb des Flaschenschwerpunktes angreifen, sind an der radial äußeren Seite des Sternrades flaschenformabhängige Führungsbögen erforderlich. Aber nicht nur diese Führungsteile müssen bei einem Flaschensortenwechsel ausgetauscht werden, sondern auch die Sternräder selbst, weil sie an ihrem Umfang an die jeweilige Flaschenform angepasste Ausnehmungen zur Aufnahme der Flaschen aufweisen. Nachteiligerweise müssen deshalb für jede Flaschengröße bzw. -form komplette Teilesätze bereitgehalten werden. Außerdem wird das Bedienungspersonal zum Wechseln der Teile für längere Zeit in Anspruch genommen.

Weitere Inspektionsmaschinen sind beispielsweise aus der DE-A-2 649 360, aus der GB-A-2 155 626, der EP-A-0 695 704 oder der US-A-4 651 879 bekannt.

Ferner ist aus der DE-U-29 607 937 ein Transportstern mit Greifarmen zu entnehmen. Demzufolge liegt der Erfindung die Aufgabe zugrunde, eine Inspektionsmaschine dahingehend zu verbessern, dass der Aufwand zum Umstellen der Maschine auf verschiedene Flaschensorten verringert wird.

Gelöst wird diese Aufgabe erfindungsgemäß durch die Inspektionsmaschine nach Patentanspruch 1.

Zweckmäßige Weiterbildungen der Erfindung sind Gegenstand der abhängigen Ausprüche. Die Flaschen werden von den Klammern in etwa in Höhe ihres Schwerpunktes an zwei gegenüberliegenden Seiten teilumfänglich eingespannt gehalten. Selbst bei höheren Umlaufgeschwindigkeiten besteht keine Kippgefahr, so dass auf das Sternrad umgebende Führungsteile verzichtet werden kann, wodurch günstigerweise auch die Scheuerrandbildung an der Flaschenseitenwand vermieden wird.

Darüber hinaus können die Klammersternräder gemäß einer Weiterbildung der Erfindung so ausgeführt werden, dass sie ohne Auswechseln für verschiedene Flaschendurchmesser innerhalb eines bestimmten Durchmesserbereiches verwendbar sind. Besonders vorteilhaft ist eine Ausführung, bei der sich die Klammern selbsttätig an verschiedene Durchmesser anpassen, indem beispielsweise elastische Klammern oder über Federelemente beaufschlagbare Klammern verwendet werden.

Bei der erfindungsgemäßen Maschine mit mehreren Inspektionskarussells oder - rädern, z.B. einem für eine optische Seitenwand- und/oder Dichtigkeitskontrolle und einem weiteren zur Fremstofferkennung (bei Kunststoffflaschen) Boden-, Mündungsdichtflächen-, Gewinde-, Laugen- oder Innenseitenwandkontrolle, ist ein erfindungsgemäß ausgeführtes Klammersternrad mit an seiner Peripherie stationär angeordneten Inspektionseinrichtungen in Flaschentransportrichtung gesehen als erstes Karussell innerhalb der Inspektionsmaschine angeordnet, so daß dann die Flaschen diesem Klammersternrad unmittelbar, d.h. ohne ein zusätzlich vorgeordnetes konventionelles Einlaufsternrad direkt zugeführt werden können. Ein solches, an erster Stelle positioniertes Klammersternrad erfüllt dann gleichzeitig die Funktion eines Einlaufsternrades und eines Inspektionskarussells, in dem die Flaschen bodenfrei eingespannt am Rumpf gehalten werden, so dass beispielsweise eine Fremdstofferkennung, Boden-, Laugen-, Mündungs-, Gewinde- oder Innenseitenwandkontrolle durchführbar ist. Diese Lösung ermöglicht eine besonders kompakte und platzsparende Bauweise.

Außerdem können bei Verwendung von selektiv ansteuerbaren Klammern durch einen dem Klammersternrad vorgeordneten Sensor als störend erkannte Fremdflaschen bereits im Einlauf geschieden werden, indem nur sortenreine Flaschen von den Klammern erfasst werden, während alle übrigen Flaschen am Klammerstern vorbeilaufen bzw. in einen Fallschacht oder Sammelraum geleitet werden.

Weiterhin ist es von Vorteil, wenn eine Inspektionsmaschine an ihrem auslaufseitigen Karussell oder Sternrad ebenfalls mit die Flaschen am Rumpfbereich erfassenden Klammern bzw. Greifzangen ausgestattet ist, so dass in der gesamten Maschine auf Führungsbögen verzichtet werden kann. Selektiv - in Abhängigkeit vom Inspektionsergebnis- gesteuert betätigbare Klammern am Auslaufsternrad sind besonders günstig, weil dann die Flaschen gezielt an verschiedene Auslaufförderer abgegeben werden können.

Nachfolgend wird ein bevorzugtes Ausführungsbeispiel anhand der Fig. beschrieben. Es zeigt:
- Fig. 1: die schematische Draufsicht auf eine Inspektionsmaschine,
- Fig. 2: die teilweise Draufsicht auf einen Transportstern,
- Fig. 3: den Schnitt A-B nach Fig. 2,
- Fig. 4: den Schnitt C-D nach Fig. 1,
- Fig. 5: den Schnitt A-B bei einer anderen Ausführungsform eines Transportsterns,
- Fig. 6: die Ansicht Z nach Fig. 5.

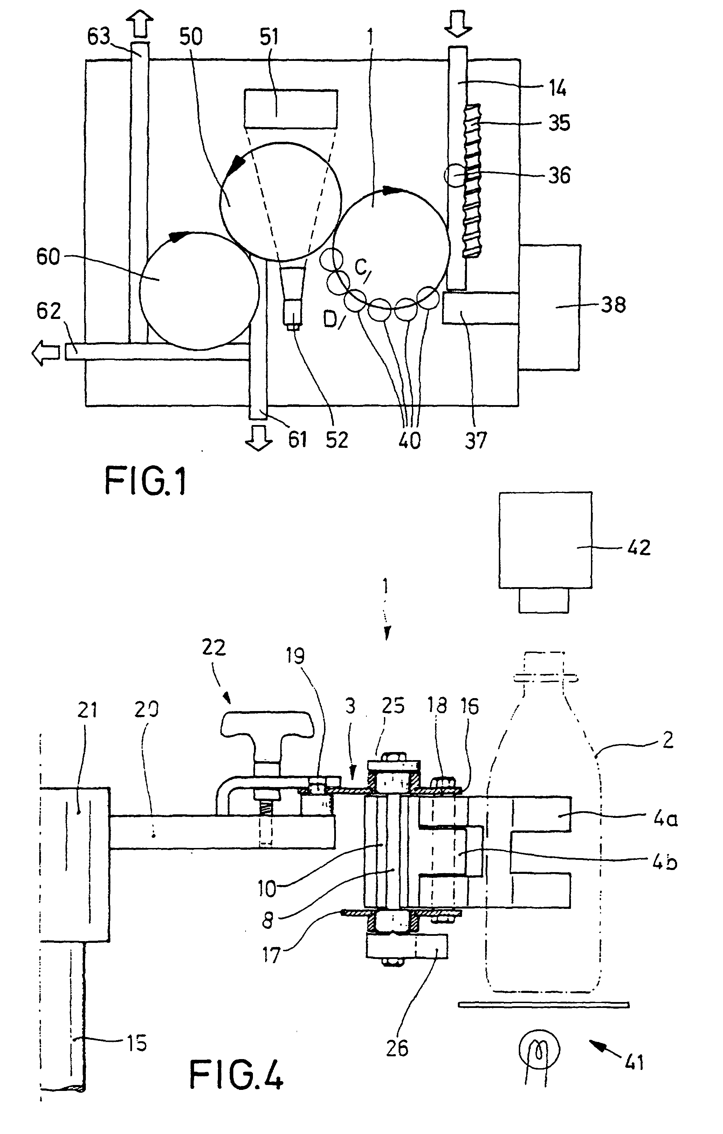

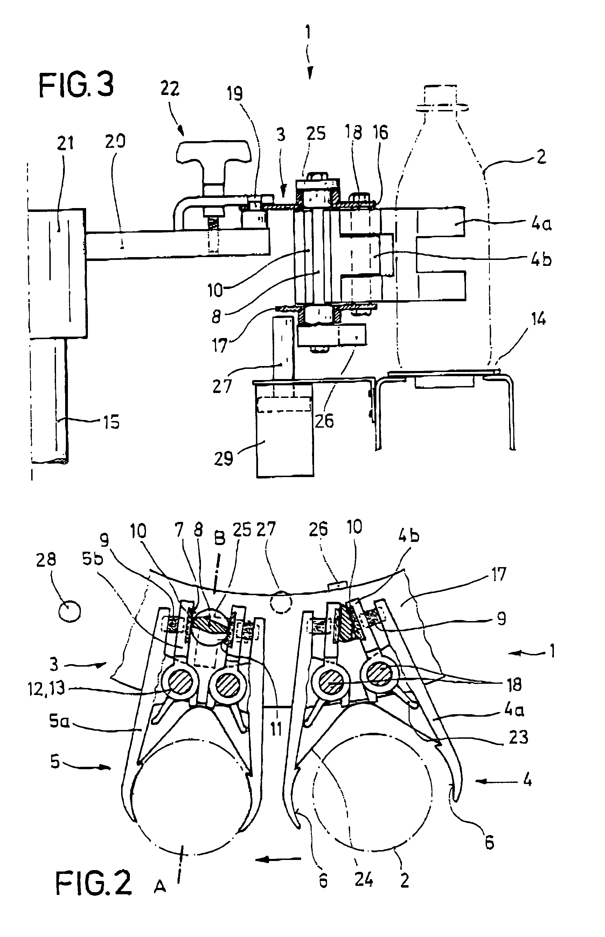

Die in Fig. 1 gezeigte Inspektionsmaschine für Leerflaschen besitzt einen Einlaufförderer 14 mit einer Einteilschnecke 35, insgesamt drei Karussells 1, 50, 60, wobei das in Flaschendurchlaufrichtung erste und letzte Karussell 1 bzw. 60 als Transportsterne mit an ihrem Umfang verteilt angeordneten Klammern 4, 5 (Fig. 2) zum Halten von Flaschen 2 an ihrem Rumpfbereich ausgeführt sind. Am Umfang des als Auslaufsternrad dienenden Transportsterns 60 sind drei Abförderer 61, 62, 63 versetzt angeordnet. Sowohl die Klammern des einlaufseitigen als auch auslaufseitigen Transportsterns 1 bzw. 60 sind mittels ansteuerbarer Betätigungseinrichtungen an bestimmten Stellen ihrer Umlaufbahn unabhängig von den benachbarten Klammern aus einer Zugriff- in eine Freigabestellung und umgekehrt überführbar, wie nachstehend im Detail noch erläutert wird.

An der Umlaufbahn des ersten Transportsterns 1 befindet sich eine erste stationär angeordnete, steuerbare Betätigungseinrichtung 29 (Fig. 3) zum Umsteuern der Klammern in dem Bereich, wo die Einteilschnecke 35 den Transportstern 1 tangiert. Eine zweite, ungesteuerte Betätigungseinrichtung ist an der Übergabestelle zwischen dem Transportstern 1 und dem Karussell 50 angeordnet. Entlang der Flaschentransportbahn im Bereich zwischen diesen beiden genannten Betätigungseinrichtungen befinden sich an der Umlaufbahn des Transportsterns 1 hintereinander versetzt mehrere stationäre Inspektionsvorrichtungen 40, die bevorzugt unter- und/oder oberhalb der Klammerumlaufebene des Transportsterns 1 nahe an dessen Teilkreis plaziert sind.

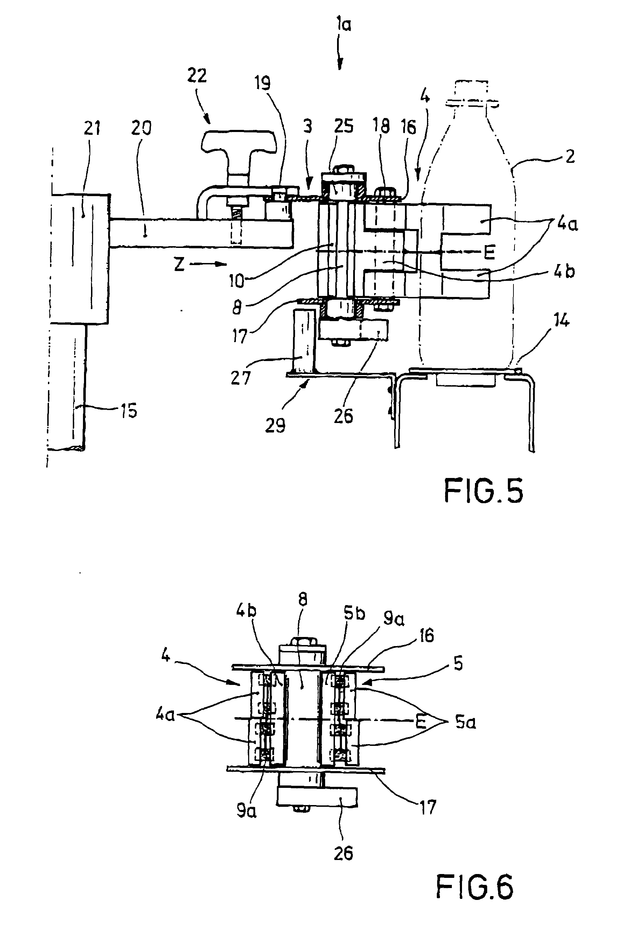

Diese einzelnen Inspektionsvorrichtungen können in an sich bekannter Weise so ausgeführt sein, dass die im Transportstern 1 von den Klammern 4, 5 boden- und mündungsfrei gehaltenen Flaschen 2 auf evtl. vorhandene Fremdstoffe, Verschmutzungen, Beschädigungen oder Restflüssigkeit, z.B. Waschlauge, am Boden-, Innenseitenwand-, Mündungs- oder Mündungsseitenwandbereich (einschließlich Gewinde) überprüft werden können. In Fig. 4 ist eine derartige, am Transportstern 1 angeordnete Inspektionsvorrichtung 40 mit einer stationären Beleuchtungseinrichtung 41 unterhalb der Umlaufebene der Flaschenböden und einem stationär oberhalb der Umlaufebene der Flaschenmündungen angeordneten Sensor 42, z.B. CCD-Kamera, dargestellt, die beispielsweise zur Bodenkontrolle verwendet werden kann.

Das auf den Transportstern 1 folgende Karussell 50 dient zur Flaschenseitenwandkontrolle und ggf. einer Dichtigkeitsprüfung. Dieses Karussell 50 besitzt einen kontinuierlich umlaufend antreibbaren Flaschentisch mit auf einer Kreisbahn angeordneten, antreibbaren Drehtellern (nicht dargestellt) auf die die zu untersuchenden Flaschen mit ihrer Bodenfläche gestellt und mittels einer oberhalb der Teller gesteuert heb- und senkbar gelagerten, ebenfalls drehbaren Zentrierglocke (nicht dargestellt) axial eingespannt festgehalten werden. Zur Durchführung einer Dichtigkeitskontrolle können die Zentrierglocken mit einem Anschlusskanal zur Erzeugung und Messung eines Differenzdrucks im Flascheninnenraum ausgerüstet sein. An der Umlaufbahn des Karussells 50 sind wenigstens eine Beleuchtungs- und eine Bildaufnahmeeinrichtung 51 bzw. 52 angeordnet. Entsprechend ausgerüstete Karussells zur Seitenwand- und/oder Dichtigkeitskontrolle sind aus der Praxis hinreichend bekannt und werden deshalb nicht weiter erläutert. Diesbezüglich wird stellvertretend auf das Patent DE 34 07 386 C2 verwiesen. Das Karussell 50 in Fig. 1 ist in entsprechender Weise ausgeführt.

Der auf das Karussell 50 folgende Transportstern 60 hat die Aufgabe, die Flaschen vom vorhergehenden Karussell 50 zu übernehmen und wahlweise einem der drei Abförderer 61, 62, 63 zuzuführen. Zu diesem Zweck befinden sich an der gemeinsamen Übergabestelle zwischen dem Karussell 50 und dem Transportstern 60 und jeweils an den mit den Abförderern gemeinsamen Tangierungspunkten am Transportstern 60 an dessen Umlaufbahn Betätigungselemente zum Umsteuern der Klammern. Die den Abförderern zugeordneten, nicht dargestellten Betätigungselemente sind selektiv in Abhängigkeit des Inspektionsergebnisses für jede einzelne Flasche zum Öffnen der entsprechenden Klammer und Freigeben der darin befindlichen Flasche von einer Auswerteinrichtung ansteuerbar, während das Betätigungselement zwischen dem Karussell 50 und dem Transportstern 60 beispielsweise ein ortsfester, nicht betätigbarer Nocken oder dgl. sein kann, da an dieser Stelle alle Klammern zum Übernehmen der Flaschen geschlossen werden müssen.

Der Einlaufförderer 14, die Einteilschnecke 35, die Transportsterne 1 und 60, das Karussell 50 und die Auslaufförderer 61, 62, 63 sind geschwindigkeits- und stellungssynchron zueinander stufenlos kontinuierlich antreibbar.

Im Bereich der Einteilschnecke 35 befindet sich wenigstens eine Kontrolleinheit 36 zum Erkennen von Fremdflaschen, die, wenn sie als solche erkannt worden sind, ohne von den Klammern des Transportsterns 1 ergriffen zu werden, vom Einlaufförderer 14 einem in Förderrichtung gesehen hinter dem Transportstern 1 liegenden Fallschacht 37 mit einem darunter stehenden Abfallcontainer 38 zugeführt werden. Die Kontrolleinheit 36 kann z.B. zum Erkennen der Flaschenhöhe,-form, -farbe, -materialzusammensetzung,-mündungsbeschaffenheit oder dgl. eingerichtet sein. Für diese Aufgabe können geeignete Sensoren, wie Kameras oder ähnliches verwendet werden. An der Übergabestelle vom Einlaufförderer 14 zum ersten Karussell 1 kann eine Reinigung der Flaschenböden durch eine nicht dargestellte Abblasvorrichtung erfolgen.

Nachfolgend wird der mechanische Aufbau der Transportsterne 1 und 60 anhand der Fig. 2 und 3 erläutert, wobei Fig. 3 die Situation im Bereich der Einteilschnecke 35 zeigt.

Der Transportstern 1 weist einen Grundkörper 3 auf, der im wesentlichen aus zwei parallelen, kreisförmigen Ringen 16, 17 besteht. Die beiden Ringe 16, 17 haben den gleichen Außendurchmesser; die Innendurchmesser sind unterschiedlich, wobei der Innendurchmesser des oberen Ringes 16 kleiner ist als der Innendurchmesser des unteren Ringes 17. Die beiden Ringe 16, 17 sind konzentrisch angeordnet und durch eine Anzahl von über ihren Umfang verteilten Paaren von Bolzen 18 mit kreisförmigem Querschnitt starr miteinander verbunden. Jeder Bolzen 18 ist mittels zweier Schrauben einzeln lösbar zwischen den beiden Ringen 16, 17 fixiert.

Der obere Ring 16 weist an seiner Innenseite gleichmäßig über den Umfang verteilt mehrere Löcher auf, die auf Zapfen 19 sitzen. Diese sind ihrerseits an den Enden von mehreren radialen Armen 20 einer Nabe 21 befestigt, die drehfest mit der Antriebswelle 15 verbunden ist. Mittels mehrerer auf den oberen Ring 16 einwirkender manueller Klemmvorrichtungen 22 ist der Grundkörper 3 auf den Armen 20 lösbar festgeklemmt und mit seiner Mittelachse konzentrisch zur Antriebswelle 15 ausgerichtet.

Auf jedem Bolzen 18 ist ein Greifarm 4, 5 schwenkbar gelagert. Die beiden Greifarme 4, 5 eines Paares von zusammengehörigen Bolzen 18 sind spiegelbildlich nach Art von Doppelhebeln ausgebildet und bilden zusammen eine Greifzange bzw. Klammer, welche eine Flasche 2 kraft- und formschlüssig zu erfassen vermag.

Jeder Greifarm 4, 5 weist zwei Teilstücke a und b auf, die z.B. aus hartem, hochfestem Kunststoff oder Metall bestehen und daher in sich biegesteif sind. Die jeweils ersten Teilstücke 4a, 5a sind als Doppelhebel ausgebildet, die in ihrem unteren und oberen Randbereich unter Bildung einer mittigen Aussparung direkt auf den Bolzen 18 schwenkbar gelagert sind. An ihren radial nach außen weisenden Enden sind die ersten Teilstücke 4a, 5a mit aufeinander zuweisenden, schalenartigen Greifflächen 6 für die Flaschen 2 versehen. Die jeweils zweiten Teilstücke 4b, 5b jedes Greifarms 4, 5 sind im wesentlichen als einfache Hebel ausgebildet, die in ihrem mittleren Höhenbereich in der Aussparung der ersten Teilstücke 4a, 5a gleichfalls direkt auf den Bolzen 18 schwenkbar gelagert sind. An ihren radial nach innen weisenden Enden sind die zweiten Teilstücke 4b, 5b mit aufeinander zuweisenden Gegenflächen 7 für einen Spreizkörper 8 versehen. Die Gegenflächen 7 sind an Einsätzen 10 aus hochverschleißfestem Kunststoff ausgebildet, welche mittels Schwalbenschwanzführungen lösbar bzw. austauschbar an den Teilstücken 4b, 5b befestigt sind.

Aufgrund der vorstehend beschriebenen Lagerungen sind die Teilstücke 4a, b; 5a, b jedes Greifarms 4, 5 sowohl gemeinsam als auch unabhängig voneinander schwenkbar. Die Bolzen 18 bilden also sowohl Schwenklager 13 für die Greifarme 4, 5 als ganzes als auch Gelenke 12 für die Relativbewegung der Teilstücke 4a, b; 5a, b untereinander. Diese Relativbewegung wird in einer Richtung durch an den zweiten Teilstücken 4b, 5b ausgebildete Anschläge 23 begrenzt.

Zwischen den radial nach innen weisenden, im wesentlichen parallel verlaufenden Bereichen der Teilstücke 4a, 4b; 5a, b sind Federelemente 9 in Form von länglichen Kissen aus elastischem Kunststoff, beispielsweise Silikon, in entsprechende Vertiefungen an den Teilstücken eingesetzt. Die Federelemente 9 erstrecken sich über die gesamte Höhe der Greifarme 4, 5 und versuchen die Teilstücke 4a, b; 5a, b auseinanderzudrücken, soweit dies die Anschläge 23 zulassen. Die Federelemente 9 sind unmittelbar hinter den Einsätzen 10 mit den Gegenflächen 7 angeordnet und ermöglichen eine elastische Relativbewegung zwischen den Teilstücken 4a, b; 5a, b, wobei die Gelenke 12 funktionsmäßig zwischen den Gegenflächen 7 und den Greifflächen 6 sitzen und konzentrisch zu den Schwenklagern 13 der Greifarme 4, 5 angeordnet sind. Ferner sind zwischen die Teilstücke 4a, 5a zweier zusammengehöriger Greifarme 4, 5 im Anschluß an die Greifflächen 6 V-förmige Federbleche 24 eingespannt, welche die Greifarme 4, 5 im Bereich der Greifflächen 6 auseinanderzudrücken suchen bzw. die Greifarme 4, 5 im Öffnungssinne vorspannen.

Parallel zu jedem Paar von Bolzen 18 und zwar mittig zwischen den Teilstücken 4b, 5b zweier zusammengehöriger Greifarme 4, 5 ist in den Ringen 16, 17 jeweils eine Steuerwelle 25 drehbar gelagert. Diese weist im Höhenbereich zwischen den Ringen 16, 17 einen nockenförmigen Spreizkörper 8 mit im wesentlichen ovalem Querschnitt auf, der durch entsprechende, teilweise parallel verlaufende Abflachungen der Steuerwelle 25 direkt gebildet wird. Liegt der Spreizkörper 8 mit seinen parallelen Seitenflächen im wesentlichen radial zur Drehachse des Transportsterns 1, so definiert er die Öffnungsposition der Greifarme 4, 5, da in diesem Falle die Gegenflächen 7 maximal angenähert und die Greifflächen 6 maximal voneinander entfernt sind (Fig. 2, rechte Seite). Dabei liegen die Gegenflächen 7 unter dem Einfluß des Federblechs 24 an den Seitenflächen des Spreizkörpers 8 an und die Flaschen 2 können ungehindert zwischen die geöffneten Greifarme 4, 5 einlaufen. Die Federelemente 9 übertragen hierbei die von den Federblechen 24 auf die Teilstücke 4a, 5a ausgeübte Kraft auf die Teilstücke 4b, 5b.

Liegt der Spreizkörper 8 mit seinen parallelen Seitenflächen im wesentlichen tangential zur Drehachse des Transportsterns 1, so definiert er die Schließposition der Greifarme 4, 5, da in diesem Falle die Gegenflächen 7 maximal voneinander entfernt und die Greifflächen 6 maximal angenähert sind (Fig. 2, linke Seite). Ist keine Flasche 2 vorhanden, so liegen die Gegenflächen 7 allein unter dem Einfluß des gespannten Federblechs 24 an den schmalen Stirnflächen des Spreizkörpers 8 an, wobei durch eine Erhebung 11 an einer der beiden Gegenflächen 7 der Spreizkörper 8 geringfügig über dem Totpunkt fixiert und so selbsthemmend stabilisiert wird. Auch in diesem Falle wird die vom Federblech 24 erzeugte Kraft durch die Federelemente 9 übertragen, die dabei ggf. leicht komprimiert werden. Der Abstand zwischen den Greifflächen 6 ist geringer als der kleinste zu verarbeitende Flaschendurchmesser.

Ist in der Schließposition des Spreizkörpers 8 bzw. der Greifarme 4, 5 zwischen diesen eine Flasche 2 vorhanden, so nehmen die Teilstücke 4b, 5b mit den Gegenflächen 7 die gleiche Lage ein. Die Teilstücke 4a, 5a sind jedoch im Bereich der Greifflächen 6 weiter voneinander entfernt, ermöglicht durch die Gelenke 12. Dies hat eine stärkere Kompression der Federelemente 9 zur Folge, die so die erforderliche Klemmkraft zum sicheren Halten der Flaschen 2 erzeugen. Die Auslegung ist z.B. derart gewählt, dass die Greifarme 4, 5 Flaschen 2 im Durchmesserbereich von 60 bis 70 Millimeter fest ergreifen können, ohne daß hierbei die Federelemente 9 mehr als um ein Drittel zusammengepreßt werden. Dies hat eine nahezu unbegrenzte Lebensdauer der Federelemente 9 zur Folge. Trotzdem können Flaschen 2 in einem größeren Durchmesserbereich, z.B. bis zu 12 mm, ohne Umstellen oder Austauschen des Transportsterns 1 problemlos transportiert werden. Die durch die Kompression der Federelemente 9 aufgebaute Klemmkraft wirkt zusätzlich stabilisierend auf den Spreizkörper 8, der somit sowohl in der öffnungsposition als auch in der Schließposition stabil ist und keine zusätzlichen Haltemittel erfordert.

Das untere Ende jeder Steuerwelle 25 ragt etwas aus dem unteren Ring 17 heraus. Auf diesen vorstehenden Enden sind winkelförmige Steuerhebel 26 befestigt. Diese wirken mit stationär unterhalb des Transportsterns 1 angeordneten Anschlagbolzen 27, 28 zusammen. Der erste, heb- und senkbare Anschlagbolzen 27 ist an der Innenseite der Umlaufbahn der Steuerwellen 25 angeordnet und Bestandteil einer steuerbaren Betätigungseinrichtung 29 (Pneumatikzylinder). Er schwenkt in der oberen, angehobenen Endlage (Fig. 3) einen in Pfeilrichtung mit dem Transportstern 1 vorbeilaufenden Spreizkörper 8 um ca. 90 Grad aus der Öffnungsposition in die Schließposition. Der zweite, nahe der Flaschenübergabestelle zum Karussell 50 positionierte Anschlagbolzen 28 ist an der Außenseite der Umlaufbahn der Steuerwellen 25 angeordnet. Er schwenkt einen vorbeilaufenden Spreizkörper 8 um ca. 90 Grad aus der Schließposition in die Öffnungsposition. Durch die Anordnung weiterer starrer oder auch höhengesteuerter Anschlagbolzen ist an jeder beliebigen Stelle der Umlaufbahn des Transportsterns 1 ein zuverlässiges Öffnen und Schließen der Greifarme 4, 5 möglich. Die Flaschen 2 können so ohne zusätzliche Führungsbögen usw. gezielt von einem Zuförderer 14 auf den Drehtisch 50 überführt oder vom Drehtisch 50 an mehrere verschiedene Abförderer 61, 62, 63 übergeben bzw. sortiert oder an einen gleichartigen Transportstern mit höhenversetzten Greifarmen übergeben werden.

Auch ist es möglich, nur einen Greifarm mit Gelenk 12 und Federelement 9 auszustatten, den anderen Greifarm ohne Gelenk, d.h. starr auszubilden und/oder drehfest am Grundkörper anzuordnen und/oder durch ein Getriebe mit Drehrichtungsumkehr mit dem gefederten Greifarm zu koppeln. Weiter ist es denkbar, jedem Greifarm einen eigenen Spreizkörper zuzuordnen.

Der Transportstern 1a nach Fig. 5 und 6 unterscheidet sich vom Transportstern 1 nach Fig. 2 und 3 dadurch, dass die doppelhebelartigen Teilstücke 4a, 5a jedes Greifarms 4, 5 in einer horizontalen, senkrecht zu den Schwenkachsen der Greifarme 4, 5 verlaufenden Schnittebene E im mittleren Höhenbereich durchgehend getrennt sind. Jeder Greifarm 4, 5 weist somit zwei doppelhebelförmige Teilstücke 4a, 5a auf, die relativ zueinander verschwenkbar sind. Die einfachhebelförmigen Teilstücke 4b, 5b dagegen sind nicht getrennt.

Die beiden jeweils zusammengehörigen Teilstücke 4a, 5a stützen sich über ein Federelement 9a auf dem zugehörigen einzigen Teilstück 4b, 5b ab. Wie die Fig. 6 zeigt, weist jedes Federelement 9a vier elastische, zylindrische Kissen auf, die durch einen dünnen, flexiblen Steg miteinander verbunden sind. Jeweils zwei elastische Kissen wirken mit den oberen Teilstücken 4a, 5a zusammen, während die beiden anderen elastischen Kissen mit dem unteren Teilstück 4a, 5a zusammenwirken. Die beiden Teilstücke 4a, 5a jedes Greifarms 4, 5 können sich somit separat an die Kontur einer ergriffenen Flasche 2 anpassen, wenn der an den Teilstücken 4b, 5b angreifende Spreizkörper 8 seine Schließposition einnimmt. Dabei können die elastischen Kissen der Federelemente 9a durchaus unterschiedlich komprimiert werden, wie die Fig. 6 zeigt. Auf diese Weise können auch sog. Kontur- oder Formflaschen mit von der Zylinderform abweichenden Oberfläche zuverlässig erfaßt und fixiert werden.

Sollen mit der Inspektionsmaschine mehrere Flaschensorten mit erheblich unterschiedlichen Durchmessern verarbeitbar sein, kann es erforderlich sein, die Transportsterne 1 und 60 bei der Umstellung auf eine andere Flaschensorte auszutauschen. Der von den Transportsternen verarbeitbare Durchmesserbereich kann aber auch vergrößert werden, wenn ein Mehrstellungsnocken 8 verwendet wird, d.h. der Spreiznocken 8 kann in Abhängigkeit des Flaschendurchmessers in verschiedene Endstellungen zum Schließen der Klammern 4, 5 gebracht werden. Zur Fixierung der jeweiligen Endstellung können die Einsätze 10 in nicht dargestellter Weise mit mehreren, den einzelnen Flaschendurchmessern zugeordneten Vertiefungen zum Einrasten der Spreiznocken 8 ausgestattet sein.

## Patentansprüche

1. Inspektionsmaschine zum Prüfen von Flaschen (2) oder dgl. mit wenigstens einem Sternrad (1) zum Vorbeiführen der Flaschen an einer Inspektionseinrichtung (40), wobei das Sternrad an seiner Peripherie mit Halteorganen (4, 5) zum Erfassen der Flaschen ausgestattet ist, **dadurch gekennzeichnet, dass** die Maschine wenigstens zwei Inspektionskarussells (1, 50) mit zugeordneten Inspektionseinrichtungen (40, 51, 52) aufweist, zumindest eines davon als Transportsternrad (1) mit am Rumpfbereich der Flaschen (2) angreifenden Klammern (4, 5) ausgebildet und in Flaschendurchlaufrichtung gesehen an erster Stelle positioniert ist, das die der Maschine zulaufenden Flaschen (2) direkt aufnimmt, an wenigstens einer Inspektionsvorrichtung (40) vorbeiführt und anschließend unmittelbar an ein zweites Inspektionskarussell (50) übergibt.

2. Maschine nach Anspruch 1, **dadurch gekennzeichnet, dass** die Flaschen (2) von den Klammern (4, 5) boden- und/oder mündungsfrei gehalten werden.

3. Maschine nach einem der Ansprüche 1 oder 2, **dadurch gekennzeichnet, dass** die Klammern (4, 5) an verschiedene Flaschendurchmesser anpassbar ausgebildet sind, insbesondere selbsttätig anpassbar.

4. Maschine nach einem der Ansprüche 1 bis 3, **dadurch gekennzeichnet, dass** die Klammern (4, 5) elastisch ausgebildet und/oder über elastische Elemente (9) betätigbar sind.

5. Maschine nach einem der Ansprüche 1 bis 4, **dadurch gekennzeichnet, dass** die Klammern (4, 5) aus einer Freigabestellung in eine Zugriffstellung und umgekehrt überführbar sind, vorzugsweise unabhängig voneinander, insbesondere gesteuert in Abhängigkeit vom Inspektionsergebnis.

6. Maschine nach Anspruch 5, **dadurch gekennzeichnet, dass** die der Maschine zulaufenden Flaschen (2) direkt dem Transportsternrad (1) zugeführt und von diesem an wenigstens einer Inspektionseinrichtung (40) zur Fremdstofferkennung, Boden-, Restflüssigkeits-, Innenseitenwand-, Mündungsseitenwand- oder Mündungsdichtflächenkontrolle vorbeigeführt werden.

7. Maschine nach Anspruch 5 oder 6, **dadurch gekennzeichnet, dass** das auf das Transportsternrad (1) folgende Karussell (50) zur Seitenwand- und/oder Dichtigkeitskontrolle eingerichtet ist.

8. Maschine nach einem der vorhergehenden Ansprüche 1 bis 7 **dadurch gekennzeichnet, dass** die Maschine auslaufseitig ein Transportsternrad (60) mit am Rumpf der Flaschen (2) angreifenden Klammern (4, 5) aufweist.

9. Maschine nach Anspruch 8, **dadurch gekennzeichnet, dass** am Umfang des Transportsternrads (60) versetzt mehrere Abförderer (61, 62, 63) vorhanden sind, und die Flaschen (2) vorzugsweise in Abhängigkeit vom Inspektionsergebnis wahlweise auf einen der Abförderer abgebbar sind.

## Claims

1. An inspection machine for testing bottles (2) or the like, comprising at least one star wheel (1) for moving the bottles past an inspection arrangement (40), the star wheel being equipped at its periphery with retaining elements (4, 5) for gripping the bottles, **characterised in that** the machine has at least two inspection carousels (1, 50) having associated inspection arrangements (40, 51, 52), at least one of which is configured as a transporting star wheel (1) having clamps (4, 5) engaging the body portions of the bottles (2) and occupies the first position, seen in the direction in which the bottles (2) pass through the machine, which transporting star wheel (1) directly picks up the bottles (2) entering the machine, moves said bottles (2) past at least one inspection arrangement (40) and then transfers them directly to a second inspection carousel (50).

2. A machine according to Claim 1, **characterised in that** the bottles (2) are held by the clamps (4, 5) with clearance around their bases and/or mouths.

3. A machine according to either of claims 1 or 2, **characterised in that** the clamps (4, 5) are configured to be adaptable, in particular automatically adaptable, to different bottle diameters.

4. A machine according to any one of claims 1 to 3, **characterised in that** the clamps (4, 5) are configured to be resilient and/or are actuatable via resilient elements (9).

5. A machine according to any one of claims 1 to 4, **characterised in that** the clamps (4, 5) are switchable from a releasing position to a gripping position and inversely, preferably independently of one another, in particular in a manner controlled as a function of the inspection result.

6. A machine according to Claim 5, **characterised in that** the bottles (2) entering the machine are fed directly to the transporting star wheel (1) and are moved by same past at least one inspection arrangement (40) for detection of foreign matter and for inspection of base, fluid residue, inner side wall, mouth side wall or mouth sealing face.

7. Machine according to Claim 5 or 6, **characterised in that** the carousel (50) following the transporting star wheel (1) is arranged to carry out side wall inspection and/or testing for fluid-tightness.

8. Machine according to any one of the preceding claims 1 to 7, **characterised in that** the machine has on its exit side a transporting star wheel (60) with clamps (4, 5) engaging the bodies of the bottles (2).

9. A machine according to Claim 8, **characterised in that** a plurality of discharge conveyors (61, 62, 63) are present in a staggered formation at the periphery of the transporting star wheel (60), and the bottles (2) are selectively deliverable to one of the discharge conveyors, preferably as a function of the inspection result.

## Revendications

1. Machine d'inspection pour contrôler des bouteilles (2) ou similaires, comprenant pour faire défiler les bouteilles devant un dispositif d'inspection (40), une roue étoile (1) équipée sur sa périphérie d'organes de maintien (4, 5) saisissant les bouteilles,
**caractérisée en ce que**
la machine présente au moins deux carrousels d'inspection (1, 50) avec des dispositifs d'inspection associés (40, 51, 52), au moins un des carrousels est constitué comme roue étoile transporteuse (1) avec des pinces (4, 5) venant en prise avec les corps des bouteilles (2) et ce carrousel observé en suivant le déplacement des bouteilles, prend d'abord une position dans laquelle il accueille les bouteilles (2) arrivant à la machine, puis les fait passer devant au moins un dispositif d'inspection (40) et enfin les transfère directement à un deuxième carrousel d'inspection (50).

2. Machine selon la revendication 1,
**caractérisée en ce que**
les bouteilles (2) sont maintenues par les pinces (4, 5) tout en conservant leurs fonds et/ou leurs embouchures libres.

3. Machine selon l'une des revendications 1 ou 2,
**caractérisée en ce que**
les pinces (4, 5) sont constituées de manières à pouvoir s'adapter à différents diamètres de bouteille, notamment automatiquement.

4. Machine selon l'un quelconque des revendications 1 à 3,
**caractérisée en ce que**
les pinces (4, 5) sont élastiques et/ou peuvent être actionnées par des éléments élastiques (9).

5. Machine selon l'une quelconque des revendications 1 à 4,
**caractérisée en ce que**
les pinces (4, 5) peuvent passer d'une position de libération à une position de prise et inversement, de préférence indépendamment les unes des autres, en étant notamment commandées en fonction du résultat de l'inspection.

6. Machine selon la revendication 5,
**caractérisée en ce que**
les bouteilles arrivant à la machine (2) sont amenées directement à la roue étoile transporteuse (1) qui les fait défiler devant au moins un dispositif d'inspection (40) pour détecter les matières étrangères et contrôler le fond, la présence de liquides résiduels, la paroi interne du corps, la paroi de l'embouchure et les portées d'étanchéité de celle-ci.

7. Machine selon la revendication 5 ou 6,
**caractérisée en ce que**
le carrousel (50) faisant suite à la roue étoile transporteuse (1) est aménagé pour effectuer le contrôle de la paroi et/ou de L'étanchéité.

8. Machine selon l'une quelconques des revendications 1 à 7,
**caractérisée en ce que**
la machine présente, du côté sortie, une roue étoile transporteuse (60) équipée de pinces (4, 5) saisissant le corps des bouteilles.

9. Machine selon la revendication 8,
**caractérisée en ce qu'**
à la périphérie de la roue étoile transporteuse (60) se trouvent plusieurs transporteurs d'évacuation (61, 62, 63) et les bouteilles sont transférées à un de ces transporteurs de préférence en fonction du résultat de l'inspection.
